## Europäisches Patentamt

## European Patent Office

## Office européen des brevets

(11) Veröffentlichungsnummer : **0 138 000**
**B1**

(12) **EUROPÄISCHE PATENTSCHRIFT**

(45) Veröffentlichungstag der Patentschrift :
25.05.88

(21) Anmeldenummer : 84110292.4

(22) Anmeldetag : 29.08.84

(51) Int. Cl.⁴ : **H 02 P   6/02,** H 02 K 29/06

(54) Elektrische Mehrphasenmaschine.

(30) Priorität : 08.09.83 DE 3332490

(43) Veröffentlichungstag der Anmeldung :
24.04.85 Patentblatt 85/17

(45) Bekanntmachung des Hinweises auf die Patenterteilung : 25.05.88 Patentblatt 88/21

(84) Benannte Vertragsstaaten :
AT DE FR GB IT SE

(56) Entgegenhaltungen :
EP-A- 0 031 026
EP-A- 0 103 821
US-A- 4 250 435

(73) Patentinhaber : Siemens Aktiengesellschaft Berlin
und München
Wittelsbacherplatz 2
D-8000 München 2 (DE)

(72) Erfinder : Freise, Werner, Prof.Dr.-Ing.
Spinozastrasse 31
D-6750 Kaiserslautern (DE)
Erfinder : Fischer, Herbert, Dipl.-Ing.
Schifferstrasse 2
D-6714 Weisenheim/Sd (DE)

**Beschreibung**

Die Erfindung bezieht sich auf eine elektrische Mehrphasenmaschine mit elektronisch über eine mit steuerbaren Halbleitern bestückte Schaltvorrichtung gemäß Oberbegriff des Anspruchs 1 ; eine derartige elektrische Mehrphasenmaschine ist aus der EP-A-31 026 bekannt.

Bei der durch die EP-A-31 026 bekannten Mehrphasenmaschine mit bifilar gewickelten und dadurch magnetisch eng gekoppelten entsprechenden Wicklungssträngen sind als steuerbare Halbleiter übliche Bipolar-Transistoren und als deren Schutz gegen zu hohe Belastung unmittelbar nach dem Abschalten eines Wicklungsstranges parallel zu dem magnetisch eng gekoppelten, um 180° elektrisch versetzten Wicklungsstrang jeweils eine gesonderte Freilaufdiode vorgesehen.

Aufgabe der Erfindung ist es, den Aufwand für die die Wicklungsstränge kommutierende Schaltvorrichtung weiter zu mindern. Die Lösung dieser Aufgabe gelingt bei einer elektrischen Mehrphasenmaschine der eingangs genannten Art durch die Lehre des Patentanspruchs 1 ; der Gegenstand des Anspruchs 2 kennzeichnet eine vorteilhafte Ausgestaltung der Erfindung.

Durch die erfindungsgemäß vorgesehene Anzahl und Anordnung der Wicklungsstränge der Arbeitswicklung im Zusammenhang mit den die Wicklungsstränge dieser Arbeitswicklung ansteuernden MOS-Transistoren wird die Weiterführung des abklingenden Stroms in den einzelnen, zuvor jeweils abgeschalteten Wicklungssträngen über die an sich vorhandenen Inversdioden der MOS-Transistoren der jeweils elektrisch um 180° versetzten Strangstromkreise ermöglicht, wobei in besonders einfacher Weise nach einer Ausgestaltung der Erfindung die magnetische Kopplung der entsprechenden Wicklungsstränge dadurch erreicht werden kann, daß diese lediglich in die gleichen Nuten eingebracht sind ; gesondert anzuschließende und mit zusätzlichen Dioden zu bestückende Freilaufstromkreise erübrigen sich somit.

Die EP-A-103 821, die einen unter Artikel 54 (3) EPÜ fallenden Stand der Technik betrifft, beschreibt eine elektrische Mehrphasenmaschine mit elektronisch über eine mit MOS-Transistoren bestückte Schaltvorrichtung kommutierten Wicklungssträngen einer geradzahlig strängigen, insbesondere 4-strängigen, Arbeitswicklung mit je zwei in Gegenphase zueinander speisbaren Wicklungssträngen und mit jedem Wicklungsstrang zugeordnetem, zumindest eine Diode enthaltenden Freilaufkreis.

Die Erfindung wird im folgenden anhand eines schematisch dargestellten Ausführungsbeispiels in der Zeichnung näher erläutert ; darin zeigen

Fig. 1 eine stirnseitige Draufsicht auf einen mit zwei Wicklungssträngen einer insgesamt 4-strängigen Arbeitswicklung belegten Sektorstator eines statorerregten, nach dem Reluktanzprinzip arbeitenden Synchron-Motor-Generators,

Fig. 2 die rotorseitige Draufsicht auf den Sektorstator gemäß Fig. 1,

Fig. 3 eine zur Ansteuerung der Arbeitswicklung mit insgesamt vier Wicklungssträngen vorgesehene, mit MOS-Transistoren bestückte Taktgeber-Schaltvorrichtung.

Die vorliegende Erfindung wird anhand einer Kommutierungssteuerung für eine statorerregte Synchronmaschine beschrieben, die als Motor-Generator, insbesondere mit Schwungmassen-Rotor, in einem Kraftfahrzeug einsetzbar ist. Bei einem bekannten Kfz-Motor-Generator (DE-A-29 17 139) bildet die der Kurbelwelle zu- bzw. abkuppelbare Schwungmasse gleichzeitig den wicklungslosen, nach dem Reluktanzprinzip arbeitenden Rotor des Motor-Generators ; der nicht näher beschriebene Stator soll an der Brennkraftmaschine bzw. am Getriebegehäuse befestigt werden. Die Schwungmasse ist durch eine zusätzliche Kupplung von der Kurbelwelle abkuppelbar und im abgekuppelten Zustand relativ zur Kurbelwelle drehbar. Bei kurzzeitigen Stillständen, wie z. B. bei Ampelstopps od. dgl., wird die Schwungmasse von der Brennkraftmaschine abgekuppelt, so daß die Schwungmasse auch bei abgestellter Brennkraftmaschine weiter rotieren kann. Beim anschließenden Wiederanfahren wird die Schwungmasse zum Starten der Brennkraftmaschine wieder angekuppelt. Zusätzlich ist vorgesehen, daß die Schwungmasse bei kurzzeitigen Stillständen des Kraftfahrzeuges durch den Motor-Generator auf einer bestimmten Drehzahl gehalten wird, die ausreicht, um nach dem Wiederankuppeln an die Brennkraftmaschine deren Start gewährleisten zu können. In den Betriebszuständen, in denen die Brennkraftmaschine in Betrieb ist, wird der Motor-Generator auf Generatorbetrieb umgeschaltet und speist elektrische Leistung z. B. in die Fahrzeugbatterie zurück.

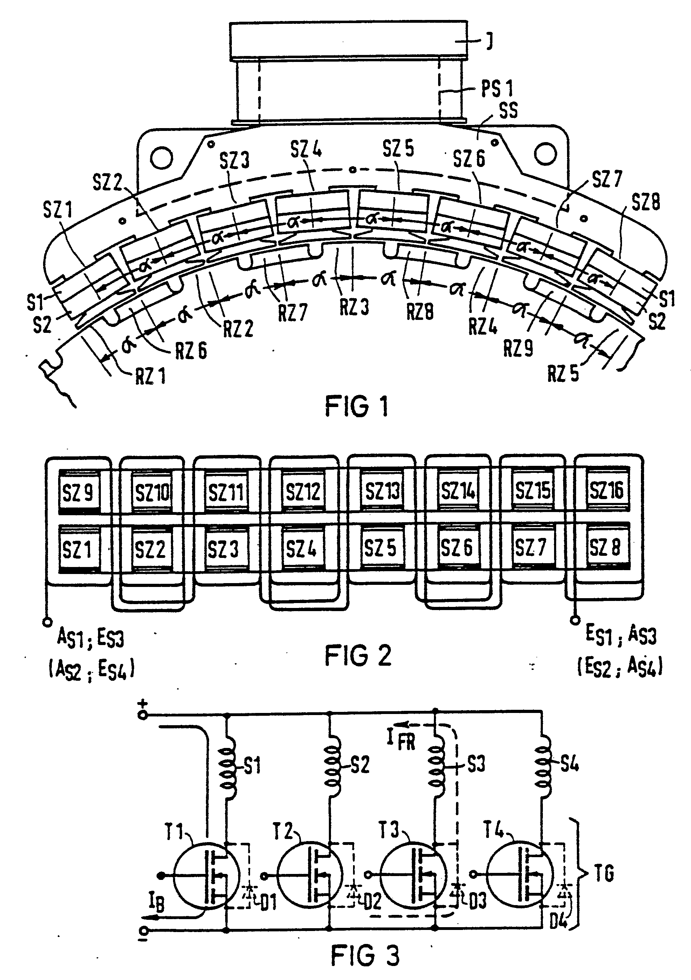

Fig. 1 zeigt in einer axialen stirnseitigen Draufsicht einen einzelnen Sektorstator SS, der an dem Motorkuppelgehäuse einer Kfz-Verbrennungsmaschine befestigt ist und sich über einen Winkel von ca. 70° über den Umfang der als Rotor mitbenutzten Kupplungsscheibe der Verbrennungsmaschine erstreckt. Der Sektorstator SS besteht aus zwei in axialem Abstand hintereinander angeordneten, magnetisch gegeneinander isolierten Sektorstator-Elementen. Jedes Sektorstator-Element ist — wie insbesondere aus Fig. 2 ersichtlich — mit insgesamt acht Zähnen SZ1-SZ8 bzw. SZ9-SZ16 versehen. Die Zähne SZ1-SZ8 des ersten Sektorstator-Elementes sind axial fluchtend zu den Zähnen SZ9-SZ16 des zweiten Sektorstator-Elementes angeordnet. Die Zähne SZ1-SZ8 bzw. SZ9-SZ16 jedes Sektorstator-Elementes sind gleichmäßig über jedes Sektorstator-Element und gleichartig in beiden Sektorstator-Elementen verteilt angeordnet. Die Statorzahnteilung ist mit $\alpha$ bezeichnet. Es sind zumindest zwei Sektorstatoren der in Fig. 1 dargestellten Art am Bohrungsumfang vorgesehen, wobei die beiden Sektorstatoren um ein ungerades Vielfaches der halben

Statorzahnteilung α von ihrer genauen Diametrallage abweichen.

Als Arbeitswicklung ist eine 4-strängige Wicklung mit jeweils um 90° el. gegeneinander versetzten Wicklungssträngen S1, S2, S3, S4 gleicher Spulenweite vorgesehen. Die gesamte Arbeitswicklung des Motor-Generators besteht somit aus einer geraden Zahl von Wicklungssträngen wobei jeweils die halbe Zahl der Stränge je einem der beiden Sektorstatoren zugeordnet ist. In Fig. 2 ist die Wicklungsanordnung sämtlicher vier Wicklungsstränge S1-S4 angegeben, wobei sich die in Klammern angegebenen Anschlüsse auf die Wicklung des zweiten, hier nicht dargestellten Sektorstators beziehen, der bis auf die zuvor genannte Abweichung zu dem ersten, in Fig. 1 dargestellten Sektorstator gegenüberliegend am Bohrungsumfang angeordnet ist. Die Wicklungsstränge S1 und S3 sind also gemäß Fig. 2 um die Zähne SZ1-SZ16 des ersten Sektorstator-Elementes und die Wicklungsstränge S2 und S4 entsprechen um die hier nicht dargestellten Zähne des zweiten Sektorstators nach dem in Fig. 2 dargestellten Wicklungsprinzip gewickelt. Es ergibt sich weiterhin, daß die Wicklungsstränge S1 und S3 einerseits sowie der Wicklungsstränge S2 und S4 andererseits jeweils in gleichen Nuten angeordnet und somit eng miteinander magnetisch gekoppelt sind. Aufgrund der gegeneinander versetzten Anordnung der beiden Sektorstatoren wird jeweils in den Wicklungssträngen S2 und S4 im zweiten Sektorstator eine um 90° el. versetzte Spannung gegenüber den Wicklungssträngen S1 und S3 im ersten Sektorstator induziert.

Die vorgenannte Ausführung gilt mit ihren Zahl- und Winkelangaben natürlich für die bisher vorzugsweise betrachtete 4-strängige Ausführung mit einer elektrischen Verschiebung von 90° el. Man kann diese grundsätzliche Lösung auch auf andere, insbesondere 6-strängige Anordnungen übertragen, bei denen dann entsprechend mehr Sektorstatoren der zuvor beschriebenen Form notwendig werden und die unter Beachtung der allgemein bekannten Regeln für eine Drehfelderzeugung im Sinne möglichst insgesamt geringer radialer magnetischer Zugbelastungen sämtlicher Sektorstatoren mit einem gegenseitigen Umfangsversatzwinkel : $\gamma = \alpha \cdot (n \pm 1/m)$ angeordnet sind ; dabei gilt : $\alpha = 360°/2p$ ; n = natürliche Zahl ; m = Strang-(Phasen) Zahl ; p = Polpaarzahl.

Jedes Sektorstator-Element eines jeden Sektorstators mündet in einem radial überstehenden Polschenkel, der jeweils von einem konzentrierten Erregerwicklungsteil umschlungen ist, der vorteilhafterweise als radial aufsteckbare Formspule ausgebildet ist. In Fig. 1 ist nur der vordere Polschenkel PS1 des einen Sektorstators ersichtlich. Die Erregerwicklungsteile sind derart an eine, gegebenenfalls steuerbare Gleichspannung angeschlossen, daß sich in den beiden zwischen den Sektorstator-Elementen eines Sektorstators liegenden Spulenseiten die gleiche Stromrichtung ergibt. Die Polenden der beiden Polschenkel jedes Sektorstators sind jeweils durch ein Rückschlußjoch J verbunden.

Als Rotor ist, in hier nicht näher dargestellter Weise, der äußere Umfang des Kupplungs-Schwungrades der Verbrennungsmaschine derart mitbenutzt, daß am Umfang der Kupplungs-Schwungscheibe zwei den aus den Zähnen der Sektorstatoren gebildeten Zahnreihen zugeordnete Zahnreihen vorgesehen sind, von denen in Fig. 1 die Zähne RZ1-RZ5 der vorderen und die Zähne RZ6-RZ9 der hinteren Zahnreihe dargestellt sind. Beide Zahnreihen stehen in magnetisch leitender Verbindung, indem sie Teile der massiven Stahl-Kupplungs-Schwungscheibe sind. Die Rotorzähne RZ1-RZ5 bzw. RZ6-RZ9 der beiden gleichartig über den gesamten Umfang gezahnten Rotorzahnreihe sind gegeneinander um die Hälfte des Zahnabstandes einer Rotorzahnreihe nach dem Prinzip « Zahn auf Lücke » versetzt. Jede Rotorzahnreihe ist über ihren Umfang mit einer gleichmäßigen Zahnteilung $2\,\alpha = 2 \cdot 360/2p$ (p = Polpaarzahl der Stator-Arbeitswicklung) versehen, derart, daß beide Zahnreihen der Kupplungs-Schwungscheibe über den gesamten Umfang je für sich eine mit dem Doppelten der Zahnteilung des Sektorstators übereinstimmenden Zahnteilung aufweisen, wobei jedoch die Zähne der einen Zahnreihe gegenüber den Zähnen der anderen Zahnreihe um eine halbe Zahnteilung gegeneinander versetzt sind, so daß in der Axialsicht die Zähne beider Zahnreihen wechselweise im Abstand am Umfang aufeinander folgen.

Fig. 3 zeigt als Schaltvorrichtung zur Kommutierung der Wicklungsstränge S1-S4 der Arbeitswicklung eine mit MOS-Transistoren T1-T4 bestückte Taktgeberschaltung TG. Dazu ist zunächst in Reihe mit jedem Wicklungsstrang S1-S4 jeweils ein steuerbares Halbleiterelement in Form eines MOS-Transistors T1-T4 geschaltet. Diese Reihenschaltung liegt an der im Motorbetrieb speisenden und im Generatorbetrieb gespeisten Gleichspannungsquelle PN. U.a. zur Erzielung möglichst kleiner Spannungsabfälle in der Kommutierung ist jeweils nur eine einzige Halbleiterstrecke in jedem Stromkreis wirksam ; in vorteilhafter Weise wird diese Halbleiterstrecke sowohl für die Wicklungsfortschaltung der Wicklungsstränge S1-S4 als auch zur Strombegrenzung der in diesen Wicklungssträngen fließenden Ströme benutzt.

Die Weiterführung des Stromes in den einzelnen Wicklungssträngen S1-S4 nach dem Ausschalten der MOS-Transistoren T1-T4 wird nun erfindungsgemäß nicht in Form von zusätzlichen, im vorliegenden Fall an sich vorzusehenden, synchron zu den MOS-Transistoren T1-T4 vom gleichen Taktgeber durchlässig zu schaltenden Freilauftransistoren sondern erfindungsgemäß durch die Inversdioden D1-D4 in den MOS-Transistoren T1-T4 der elektrisch jeweils um 180° versetzten Wicklungsstrangstromkreise gewährleistet, wobei diese um 180° gegeneinander versetzten Wicklungsstrangstromkreise S1 und S3 bzw. S2 und S4 durch die erfindungsgemäße Anordnung in den gleichen Nuten magnetisch eng miteinander gekoppelt sind. Die Inversdioden begrenzen dabei die Spannungsbeanspruchung des jeweils gerade schaltenden MOS-Transistors auf etwa den doppelten Wert der Speisespannung, also auf den Wert, der als reguläre Sperrspannung sowieso unvermeidlich ist.

Die in Fig. 3 als Beispielsfall einer Kommutierung eingezeichneten Strompfade zeigen mit ausgezogener Kontur den Betriebsstrom $I_B$ bei eingeschaltetem und an das speisende Netz angeschlossenem Wicklungsstrang S1 und mit gestrichelter Kontur den an die Abschaltung des MOS-Transistors T1 anschließenden Freilaufstrom $I_{FR}$.

**Patentansprüche**

1. Elektrische Mehrphasenmaschine mit elektronisch über eine mit steuerbaren Halbleitern (T1-T4) bestückte Schaltvorrichtung kommutierten Wicklungssträngen einer geradzahlig strängigen, insbesondere 4-strängigen, Arbeitswicklung mit je zwei in Gegenphase zueinander speisbaren und magnetisch eng miteinander gekoppelten Wicklungssträngen (51 ; 53 bzw. 52 ; 54) und mit jedem Wicklungsstrang zugeordnetem, zumindest eine Diode enthaltenden Freilaufkreis (Inversdioden D1-D4), wobei zum Strom-Freilauf eines abzuschaltenden Wicklungsstranges der Strompfad über die Diode des steuerbaren Halbleiters für den Wicklungsstrang vorgesehen ist, der mit dem gerade abgeschalteten Wicklungsstrang magnetisch eng gekoppelt und gegenüber diesem um 180° elektrisch versetzt ist, dadurch gekennzeichnet, daß als steuerbare Halbleiter für die vier Wicklungsstränge (S1 ; S3 bzw. S2 ; S4) MOS-Transistoren (T1-T4) vorgesehen und deren Inversdioden jeweils als Diode des Freilaufkreises ausgenutzt sind.

2. Mehrphasenmotor nach Anspruch 1, dadurch gekennzeichnet, daß die jeweils in Gegenphase zueinander speisbaren Wicklungsstränge (S1 ; S3 bzw. S2 ; S4) durch Anordnung in gleichen Nuten magnetisch eng miteinander gekoppelt sind.

**Claims**

1. Electric polyphase machine having winding phases, electronically commutated by means of a switching device provided with controllable semiconductors (T1-T4), of a working winding having an even number of phases, more particularly 4 phases, comprising pairs of winding phases (S1 ; S3 and S2 ; S4 respectively) which can be fed in phase opposition to one another and are magnetically closely coupled together and, associated with each winding phase, a free-wheeling circuit containing at least one diode (inverse diodes D1-D4), there being provided for the current free-wheeling of a winding phase to be disconnected the current path via the diode of the controllable semiconductor for the winding phase which is magnetically closely coupled to the winding phase just disconnected and is offset by 180 electrical degrees in relation to the latter, characterised in that MOS transistors (T1-T4) are provided as controllable semiconductors for the four winding phases (S1 ; S3 and S2 ; S4), and the inverse diodes of the said MOS transistors are respectively utilised as diode of the free-wheeling circuit.

2. Polyphase motor according to claim 1, characterised in that the winding phases (S1 ; S3 and S2 ; S4 respectively) adapted to be fed respectively in phase opposition to one another are magnetically closely coupled together by arrangement in the same slots.

**Revendications**

1. Machine électrique polyphasée, avec des branches d'enroulement, commutées électroniquement par un dispositif de commande muni de semi-conducteurs commandés (T1-T4), d'un enroulement de travail possédant un nombre pair de branches, en particulier 4 branches, qui peuvent être alimentées deux à deux en opposition de phase et qui sont intimement couplées magnétiquement l'une à l'autre (S1 ; S3 respectivement S2 ; S4), et avec un circuit de roue libre (diodes inverses D1-D4) coordonné à chaque branche d'enroulement et contenant au moins une diode, avec prévision, pour la circulation libre du courant d'une branche d'enroulement à couper, du trajet de courant passant par la diode du semi-conducteur commandé prévu pour la branche d'enroulement qui est intimement couplée magnétiquement avec la branche qui vient d'être coupée et est électriquement décalée de 180° par rapport à celle-ci, caractérisée en ce que des transistors MOS (T1-T4) sont prévus en tant que semi-conducteurs commandés pour les quatre branches d'enroulement (S1 ; S3 respectivement S2 ; S4) et que les diodes inverses de ces transistors sont utilisées chaque fois comme diode du circuit de roue libre.

2. Moteur polyphasé selon la revendication 1, caractérisé en ce que les branches d'enroulement (S1 ; S3 respectivement S2 ; S4) pouvant être alimentées en opposition de phase l'une par rapport à l'autre, sont intimement couplées magnétiquement l'une à l'autre par leur disposition dans les mêmes encoches.

0 138 000

FIG 1

FIG 2

FIG 3

1